# EUROPEAN PATENT SPECIFICATION

(11) **EP 4 650 275 B1**
(45) Date of publication and mention of the grant of the patent: **26.08.2026**
(21) Application number: 24176604.7
(22) Date of filing: 17.05.2024
(51) Int. Cl.: B64D 11/02, B64D 11/04

(54) **MULTIFUNCTIONAL WATER SUPPLY SYSTEM WITH BUFFER TANK FOR POTABLE WATER DELIVERY**
MULTIFUNKTIONALES WASSERVERSORGUNGSSYSTEM MIT PUFFERTANK ZUR TRINKWASSERVERSORGUNG
SYSTÈME D'ALIMENTATION EN EAU MULTIFONCTIONNEL AVEC RÉSERVOIR TAMPON POUR L'ALIMENTATION EN EAU POTABLE

(43) Date of publication of application: 19.11.2025
(73) Proprietor: AIRBUS Operations GmbH, 21129 Hamburg (DE)
(72) Inventor: Kiehne, Oliver, Hamburg (DE); Wenderoth, Stefan, Hamburg (DE); Timke, Patrick, Hamburg (DE)
(74) Representative: Schornack, Oliver

(56) References cited:
- EP-A1- 4 361 041
- CN-A- 117 627 106
- DE-A1- 102021 128 133
- US-A1- 2010 221 642
- US-A1- 2014 059 754

## Description

The present disclosure generally relates to a water supply system for an aircraft section, a water consumer assembly and an aircraft. Particularly, the present disclosure relates to a water supply system and a water consumer assembly having such system, where a buffer tank, a discharge pipe and a conveying device can supply water to a water consumer, and a bypass pipe with a pressure relief valve is provided bypassing the conveying device towards the buffer tank.

US 2014/059754 A1 discloses a device for recycling grey water in, for example, an aircraft, and for supplying the recycled water to flush a toilet in a vehicle. The device comprises a pump configured to circulate a portion of grey water stored in a tank to a filter unit, and a tank for storing filtered water. DE 10 2021 128133 A1 discloses a water supply system for an aircraft, wherein water pipes are formed as flexible hoses made of plastic, and a feed pump is configured to supply water from a water reservoir into the water pipes at a predetermined pressure and flow rate. EP 4 361 041 A1 discloses a water supply system for a monument, such as a lavatory, in an aircraft, for reusing water, such as grey water, wherein a pressureless water buffer tank is installed in the monument above a potable water consumer to store a predetermined amount of potable water. CN 117 627 106 A discloses a method for operating an on-board water supply and distribution system of an aircraft, for example a commercial aircraft, for supplying potable water to consumer assemblies such as sinks, wherein a pump is operated in a supply mode so that water from a central tank is supplied to one of a plurality of consumer assemblies.

In a conventional aircraft, water is stored in a centralised water tank and is distributed via a pipe network towards consumer equipment. The pipes of the network are usually made from stainless steel or titanium and the water is conveyed therethrough at a pressure level corresponding to a consumer pressure level, i.e. a pressure required at the water consumers.

A further water distribution system is disclosed in EP 3 385 163 A1 and includes flexible hoses of smaller diameter than conventional steel or titanium pipes. The water is conveyed through such flexible hoses at a higher pressure to compensate for the smaller diameter. At the end of each hose is a decentralised unpressurised buffer tank for storing water to be supplied to associated water consumer equipment.

However, in such systems the water network supplying water to the water consumers still requires improvement.

It is an object of the present disclosure to provide an enhanced water supply system, that particularly maintains a constant water pressure level for the water consumers.

This object is solved by the present invention as defined in the independent claim 1.

Preferred embodiments are defined by the dependent claims.

According to a first aspect to better understand the present disclosure, a water supply system for an aircraft section comprises a buffer tank configured to receive water from a water system and store the received water in an unpressurised manner, a discharge pipe fluidly coupled to the buffer tank, and a conveying device connected to the discharge pipe and configured to convey water from the buffer tank through the discharge pipe.

The water system can be any conventional water system comprising a central tank and one or more pumps. The water system can be a conventional water system operating at a pressure level corresponding to a consumer pressure level, or a high-pressure water system operating at a pressure level higher than the consumer pressure level. The water from the central tank is distributed to at least one water consumer group, such as a monument including at least one water consumer. Each water consumer group and/or monument is associated with the disclosed water supply system equipped with the buffer tank.

The discharge pipe is fluidly coupled to an outlet or discharge of the buffer tank, in order to receive the water buffered in the buffer tank and to guide the water to the conveying device. In other words, the conveying device is installed in the discharge pipe, so that the buffered water is conveyed from the buffer tank through the discharge pipe. Downstream of the conveying device the water in the discharge pipe (or any further pipe) can be pressurised by the conveying device. This pressure built up by the conveying device can be set with respect to the water consumers supplied with the water by the conveying device. Particularly, the water pressure level downstream of the conveying device can be smaller than the water pressure in a conventional high pressure water system.

The water supply system further comprises a bypass pipe fluidly coupled to the discharge pipe downstream of the conveying device and fluidly coupled to the buffer tank, and a pressure relief valve arranged in the bypass pipe and configured to open when a pressure of the water in the bypass pipe exceeds a threshold pressure level and to block water from flowing through the bypass pipe when the pressure of the water in the bypass pipe is below the threshold pressure level.

In other words, the bypass pipe allows bypassing the conveying device. The pressure relief valve is closed (or is in a closed position), i.e. blocks the bypass pipe, if a water pressure is less than the threshold pressure level. Only if the water pressure increases and exceeds the threshold pressure level, the pressure relief valve opens (or is brought into an open position), and frees the bypass pipe, so that a fluid communication of a portion of the discharge pipe downstream of the conveying device and the buffer tank, is possible.

Since the water in the buffer tank, is unpressurised, and since the conveying device is configured to build up a pressure in the discharge pipe downstream of the conveying device, the bypass pipe and the pressure relief valve will mainly function as a bypass from the downstream portion of the discharge pipe towards the buffer tank.

Thus, the water pressure in the discharge pipe downstream of the conveying device as well as any further water network, e.g. pipe, etc. can be maintained at the level corresponding to the threshold pressure level. Any change of pressure downstream of the conveying device can be compensated, either by the operation of the conveying device (in case of a pressure drop) or by releasing water from the discharge pipe or further water network downstream of the conveying device through the bypass pipe into the buffer tank (in case of a pressure increase).

The provision of the bypass pipe and the pressure relief valve can save water. Particularly, in case of a water pressure increasing above the threshold pressure level, while the conveying device operates, would require means to drain the excess water, so that it would be lost as potable water. If this occurs multiple times during a long-haul flight, a certain amount of potable water is wasted.

Moreover, the pipes downstream of the conveying device and buffer tank are regularly much shorter compared to the length of pipe(s) in a conventional water network having a centralised tank and centralised pumps conveying water to all water consumers of an aircraft at the same pressure level. Such "small" water network is more prone to pressure changes, which were more easily compensated in the larger conventional water networks.

Furthermore, as a mere example, the pressure relief valve can be a spring-loaded valve or other biased valve, that can be set to open when a water pressure acting against the spring or biasing force exceeds the threshold pressure level (i.e. the set spring/bias force). This includes adjustable valves, where the threshold pressure level can be set. It is to be understood that the pressure relief valve can also be an actuated valve, for example, with a motorised (electric, hydraulic or pneumatic) actuator, wherein the actuator can be controlled depending on a measured pressure, such as a water pressure measured by a pressure sensor in the bypass pipe.

In an implementation variant, the bypass pipe can be fluidly coupled to a portion of the discharge pipe that is upstream of the conveying device. Thus, the bypass pipe can be fluidly connected at both ends to the discharge pipe and thereby bypassing the conveying device. Alternatively, the bypass pipe is fluidly coupled directly with the buffer tank, depending on the location and route of the discharge pipe between the buffer tank and the conveying device.

In an implementation variant, the water supply system can further comprise a first water level sensor configured to indicate that a water level in the buffer tank has reached an upper threshold water level. The upper threshold water level is smaller than a maximum level of the buffer tank where the full capacity of the buffer tank has been reached. This results in a reserve of the buffer tank (storage volume) that can be used for other purposes. For instance, if the pressure relief valve opens and water bypasses the conveying device through the bypass pipe, such excess water can be released into the buffer tank, even if the water level in the buffer tank is at the upper threshold water level. Thus, instead of draining the excess water as in conventional systems, it can be fed back into the buffer tank and stored for later use.

It is to be understood that a reference to excess water in this disclosure is interchangeable with an amount (volume) of water that, once released from the at least one water pipe, reduces the water pressure to the threshold pressure level. Therefore, a reference to the excess water corresponds to a reference of a pressure level higher than the threshold pressure level.

Alternatively, a linear water level sensor can be employed that continuously measures a water level in the tank, i.e. over the entire height of the sensor. This allows setting the upper threshold water level to a certain point on the linear sensor, i.e., a certain sensor signal, or to arrange the linear sensor in the tank only under the upper threshold water level, i.e., an upper end of the linear sensor is at the upper threshold water level.

In an implementation variant, the upper threshold water level can be set in accordance with a number and/or a type of water consumers supplied with water from the buffer tank via the conveying device. For instance, with increasing number of water consumers there is a higher probability of a pressure increase, which may result in releasing excess water through the bypass pipe into the buffer tank (by opening the pressure relief valve). Thus, having a larger number of water consumers the upper threshold water level can be set lower compared to a situation with a small number of water consumers. In other words, with each water consumer installed downstream of the conveying device, the upper threshold water level may be reduced by a predefined amount, i.e., stepwise increasing the reserve storage volume in the buffer tank.

The type of water consumer also plays a role regarding the probability of a pressure increase. As a mere example, a faucet or other water dispenser is usually equipped with a discharge valve. If such discharge valve is closed, the pressure in the associated water pipe increases due to the stopping of the water (release of kinetic energy), while the conveying device may still be operating. Such pressure increase can result in excess water that can be released via the pressure relief valve and bypass pipe into the buffer tank. In addition, another type of water consumer can be configured to heat the water, such as a hot water dispenser, coffeemaker or the like. During such heating, the water expands resulting in excess water. Instead of draining the excess water, it can be released via bypass pipe and pressure relief valves into the buffer tank.

In an implementation variant, the water supply system can further comprise an overflow configured to drain excess water from the buffer tank exceeding the full capacity of the buffer tank. Thus, if the "reserve" of the buffer tank is filled with water, any additional excess water entering the buffer tanks, for example, via the bypass pipe and an open pressure relief valve, can be drained, in order to avoid damage of the buffer tank or any other equipment associated therewith.

In an implementation variant, the water supply system can further comprise a heater in the buffer tank. The heater can be configured to heat the water stored in the buffer tank to a predefined temperature. This allows providing hot water to any connected water consumer, so that individual heating elements associated with the respective water consumer can be omitted. Thus, weight may be saved, resulting in a lightweight water supply system or lightweight monument including such water consumers. Such heated buffer tank can be employed, for example, for a group of water consumers that all require warm/hot water.

In an implementation variant, a supply rate of water into the buffer tank can be controlled. Specifically, such control can include a reduced flow rate of water supply into the tank that depends on the heating capability of the heater. Such control can include controlling an opening degree of an inlet valve or the time the valve is opened in a manner where the maximum heating capacity of the heater (such as in Litre per minute) is greater than an amount of maximum inflow (also in Litre per minute). This ensures that a temperature of the water in the buffer tank can be maintained, and the inflowing water does not cool down the buffered water, even if warm water is discharged from the buffer tank.

It is to be understood that a water supply system with a heater in the buffer tank can be used in conventional water supply systems, too. Specifically, water from a main (central) tank can be provided via a conventional aircraft water network under regular pressure (optimized for the water consumers). Thus, conventional systems can be enhanced by the disclosed heating buffer tank.

According to a second aspect to better understand the present disclosure, a water consumer assembly comprises a water supply system of the first aspect or one or more of its variants, at least one water consumer, and at least one water pipe connecting the conveying device with the at least one water consumer. The at least one water pipe is fluidly coupled to the bypass pipe downstream of the conveying device. For example, the at least one water pipe can comprise the downstream portion of the discharge pipe of the water supply system or may include a pipe that is connected to this downstream discharge pipe portion.

As a mere example, the at least one water pipe can comprise a plurality of water pipes forming a water network supplied with water from the buffer tank by the conveying device. For instance, the water network can comprise one or more branches of water pipes supplying water to respective water consumers.

In any case, the water pressure in any of the water pipes is the same. Thus, if the water pressure in the at least one water pipe increases and exceeds the threshold pressure level, the pressure relief valve of the water supply system opens, to which the at least one water pipe is fluidly connected via the bypass pipe. Thus, excess water from the at least one water pipe can be released into the buffer tank.

This results in a constant pressure in the at least one water pipe and, hence, at each of the at least one water consumer. Even if the length of the at least one water pipe is rather short (compared to the length of water pipes in conventional aircrafts), a constant pressure at each of the at least one water consumer can be maintained. As a mere example, a length of the at least one water pipe can be between a few tenth of centimetres and a few metres, such as 0.3 m to 5 m, preferably 0.5 m to 3m, while water pipes in a conventional aircraft water network can easily have a length of 30 m, 40 m or more.

In an implementation variant, the at least one water consumer can comprise a heatable water consumer including a heating element. Thus, water can be provided from the buffer tank to the water consumer, where the water is warmed or heated. Due to the natural expansion of water when becoming warmer, excess water is present in the at least one water pipe downstream of the conveying device, i.e., the pressure in the at least one water pipe will increase. Such excess water can be released into the buffer tank via the bypass pipe and pressure relief valve.

In an implementation variant, the buffer tank can be configured to receive and hold an amount of water flowing through the bypass pipe due to heat expansion of the water at the at least one water consumer during operation of the heating element. Thus, the buffer tank is designed to have a capacity sufficient to receive the amount of water due to heat expansion. The upper level, to which water is filled into the buffer tank from the water system, is set below the maximum water level corresponding to the full capacity of the buffer tank. Thus, a reserve volume is provided in the buffer tank that can be set in accordance with an expected amount of excess water, depending on the number and/or type of water consumer.

In an implementation variant, the at least one water consumer can be a heater tank comprising a heating element. Such water consumer comprises a water tank receiving a predefined amount of water that is heated by the heating element. As a mere example, the heater tank can be employed for one or more water consumers that require hot water, such as a coffeemaker, hot water dispenser or the like.

In an implementation variant, the water consumer assembly can comprise a water mixing unit configured to receive warm water from the heater tank and cold water from a cold water pipe of the at least one water pipe, to mix the warm and cold water to a predefined temperature, and to provide the water to a faucet being one of the at least one water consumer. Thus, the heater tank can also be used for water consumers that require water at a temperature less than provided by the heater tank, but warmer than provided by the buffer tank. Such heater tank will generate excess water due to heat expansion of the water when it is warmed/heated in the heater tank. As the heater tank forms one of the water consumers, it is in fluid communication with the bypass pipe and pressure relief valve, so that the excess water can be fed back to the buffer tank.

As a mere example, the cold water provided to the mixing unit can be from the buffer tank, another buffer tank of a different water supply system and/or from the water system (with or without pressure reducer).

In an implementation variant, the water supply system can comprise a control unit configured to control operation of the conveying device, wherein the water consumer assembly can further comprise at least one signal line configured to transmit an indication signal indicating that one or more of the at least one water consumers are activated and/or indicating a water pressure in the at least one water pipe measured by a pressure sensor.

In this regard, the at least one signal line is connected to the control unit, and the control unit is configured to control operation of the conveying device to maintain a constant pressure level in the at least one water pipe. In other words, the control unit can interpret the indication signal as a demand for a water supply, so that the conveying device is activated or its flow rate is increased (in case of an already activated or continuously running conveying device). In case the indication signal indicates a water pressure measured by a sensor, the control unit can operate the conveying device in a target-performance manner, where the flow rate (operating speed) of the conveying device depends on a deviation from a set target pressure value.

According to a third aspect to better understand the present disclosure, an aircraft comprises at least one water supply system of the first aspect or one or more of its variants.

Alternatively or additionally, the aircraft comprises at least one water consumer assembly of the second aspect or one or more of its variants.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof, insofar as they fall within the scope of the appended claims.

In the following, the present disclosure will further be described with reference to exemplary implementations illustrated in the figures, in which:
- Figure 1: schematically illustrates a water supply system;
- Figure 2: schematically illustrates an exemplary water consumer assembly;
- Figure 3: schematically illustrates another exemplary water consumer assembly;
- Figure 4: schematically illustrates a further exemplary water consumer assembly; and
- Figure 5: schematically illustrates an aircraft comprising a water supply system.

In the following description, for purposes of explanation and not limitation, specific details are set forth in order to provide a thorough understanding of the present disclosure. It will be apparent to one skilled in the art that the present disclosure may be practiced in other implementations that depart from these specific details.

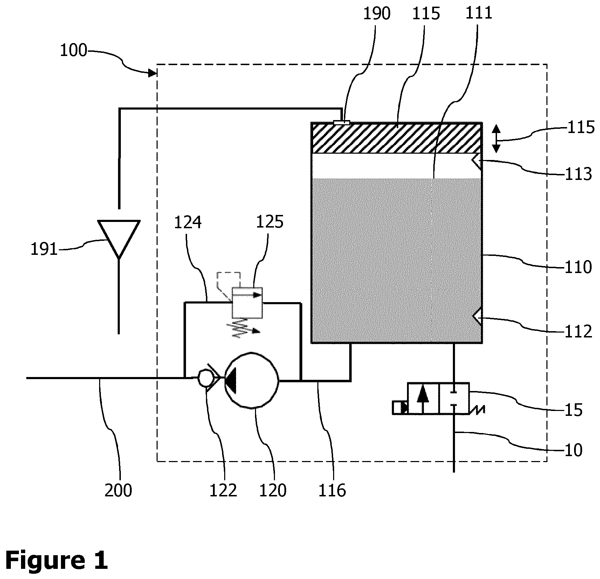

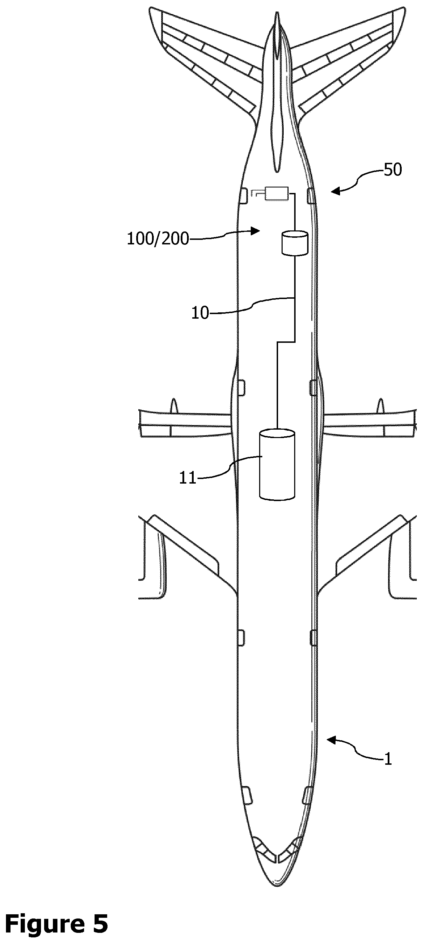

Figure 1 schematically illustrates a water supply system 100 that can be installed in an aircraft 1 (Figure 5). The water supply system 100 comprises a buffer tank 110 configured to receive water from a water system 10. As a mere example, an inlet valve 15 associated with the buffer tank 110 can be disposed between a pipe of the water system 10 and the buffer tank 110, in order to fill water (e.g., potable water) from the water system 10 into the buffer tank 110. Since the present disclosure is directed to the water supply system 100, a water pipe and a water system are used interchangeably and are both referred to by reference numeral 10.

In accordance with an example, the water system/pipe 10 can provide (potable) water at a pressure higher than required by any water consumer. Thus, the water system can be a high-pressure water system that supplies water at a pressure between 12 to 20 bar, preferably 15 bar.

In accordance with another example, the water system/pipe 10 can provide (potable) water at a pressure sufficient for any water consumer in the water system. By employing the buffer tank 110 of the water supply system 100 such water system 10 can be improved by designing the water supply system 100 specifically with respect to the needs and requirements of the water consumers of the water supply system 100.

The buffer tank 110 can be equipped with one or more water level sensors, such as the exemplarily illustrated lower level sensor 112 and/or upper level sensor 113. Likewise, a linear water level sensor can be employed that measures a water level over its entire length. When the upper level sensor 113 indicates that the water level in the buffer tank 110 is lower than a pre-set upper level, the inlet valve 15 can be opened, in order to (re-)fill the buffer tank 110 up to the upper level corresponding to the location illustrated exemplarily in Figure 1. Optionally, the inlet valve 15 can be opened to fill the buffer tank 110 with water from the water system 10 (the general water system 10 of the aircraft 1), when the water level in the buffer tank 110 reaches the lower level, which can be measured by the lower level sensor 112. Thus, the buffer tank 110 may not always be kept full, i.e. having water up to the upper level sensor 113. It is to be understood that the buffer tank 110 can be equipped with one or both of the illustrated lower and upper level sensors 112, 113, or the linear water level sensor (not illustrated).

As will be outlined in more detail below, the upper level sensor 113 may indicate that an upper threshold water level is reached, wherein the upper threshold water level is smaller than a maximum level of the buffer tank 110 when the full capacity of the buffer tank has been reached. Figure 1 schematically illustrates a hashed area and a double arrow indicating a variable reserve volume 115 between a water level corresponding to the upper threshold water level and the maximum level corresponding to a completely full tank 110. This reserve volume 115 may be adjustable, i.e., can be set, depending on certain parameters as outlined in more detail below.

In case the water level in the buffer tank 110 exceeds the maximum level (i.e., the buffer tank 110 is completely filled), an overflow 190 allows water to be guided to a drain 191, which can be a regular drain or waste water system of the aircraft 1. The buffer tank 110 is unpressurised, for example, can be open to the ambient atmosphere. This can be achieved in combination with the overflow 190 and/or drain 191.

The water supply system further comprises a discharge pipe 116 fluidly coupled to the buffer tank 110. Thus, the discharge pipe 116 is or at least forms part of an outlet of the buffer tank 110.

A conveying device 120 is connected to the discharge pipe 116 or is integrated into the discharge pipe 116, and is configured to convey water from the buffer tank 110 through the discharge pipe 116. It is to be understood that the conveying device 120 can also be arranged in the buffer tank 110, and still conveys water through the discharge pipe 116. A check valve 122 arranged in the discharge pipe 116 downstream of the conveying device 120 can optionally be provided, in order to avoid water flowing through the conveying device 120 into the buffer tank 110, for example, if the conveying device 120 is deactivated.

As a mere example, the conveying device 120 can be configured to operate in a manner that a water pressure in the discharge pipe 116 is approximately 1 to 5 bar, preferably 1.5 to 3 bar, and most preferably 2.0 to 2.2 bar, such as 2.0 or 2.1 or 2.2 bar. Thus, the water pressure downstream of the buffer tank 110 can be smaller than in a conventional high pressure water system 10. Thus, the high-pressure water system 10 can be optimised for transporting water from a centralised water tank 11 (Figure 5) to one or more buffer tanks 110, while the water supply system 100, including the conveying device 120, can be optimised with respect to water consumers present in this water supply system 100. For instance, a water pressure generated by the conveying device 120 can be set and/or adjusted in accordance with an optimal water pressure for a connected and/or activated water consumer.

The water supply system 100 further comprises a bypass pipe 124 that is fluidly coupled to the discharge pipe 116 upstream and downstream of the conveying device 120. In other words, the bypass pipe 124 can be used to bypass the conveying device 120 (as well as the check valve 122).

A pressure relief valve 125 is arranged in the bypass pipe 124. The pressure relief valve 125 is configured to open when a pressure of the water in the bypass pipe 124 exceeds a threshold pressure level, and to block water from flowing through the bypass pipe 124 when the pressure of the water in the bypass pipe 124 is below the threshold pressure level.

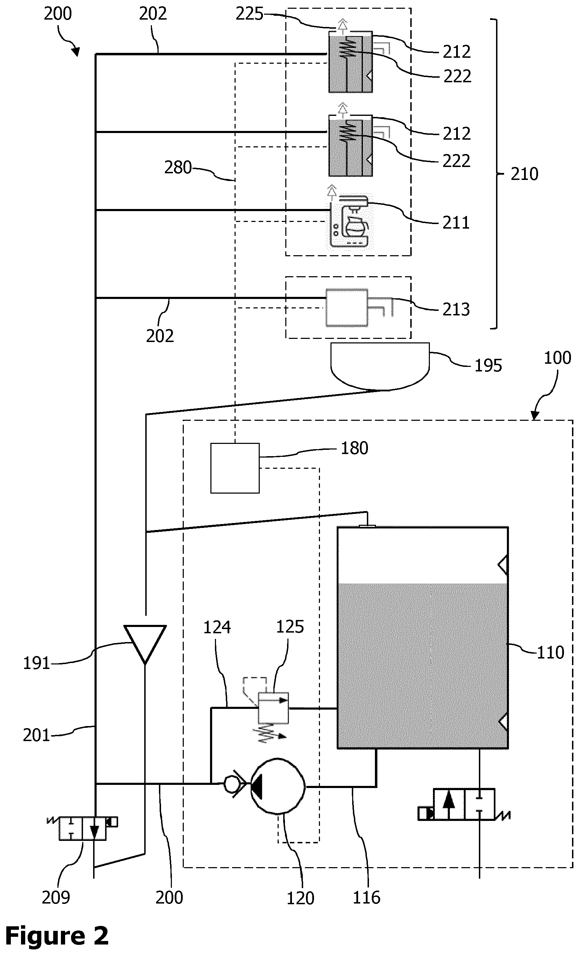

Since the buffer tank 110 is unpressurised, and the conveying device 120 builds up a pressure in the discharge pipe 116, a water pressure reaching or exceeding the threshold pressure level will be on the downstream side (downstream with respect to the conveying device 120). Thus, in case the water pressure in the discharge pipe 116 exceeds the threshold pressure level, and the pressure relief valve 125 opens, water will flow back into a portion of the discharge pipe 116 upstream of the conveying device 120 and, hence, back into the buffer tank 110. It is to be understood that the bypass pipe may likewise be in fluid communication directly with the buffer tank 110 (see Figures 2 to 4) instead of an upstream portion of the discharge pipe 116.

Such excess water flowing back into the buffer tank 110 may be received and stored in the buffer tank 110 due to the "reserve" volume 115. Thus, the excess water is not directly drained as in conventional systems, but can be reused due to the storage in the buffer tank 110.

Figure 1 only schematically illustrates a short portion of a water pipe forming part of a water consumer assembly 200 associated water network. Such water consumer assembly 200 can comprise a plurality of water-related components, which will be exemplarily explained with respect to Figures 2 to 4.

Figure 2 schematically illustrates an exemplary water consumer assembly 200, which comprises a water supply system 100, such as water supply system 100 of Figure 1. The description of the water supply system 100 will be omitted, in order to avoid redundancies with respect to the water supply system 100 explained with respect to Figure 1.

The water consumer assembly 200 of Figure 2 comprises at least one water consumer 211, 212, 213, which together are referred to as water consumers 210. As mere examples, such water consumers can comprise a coffeemaker 211, a water heater 212 and a faucet 213. The faucet 213 can be provided in combination with a sink 195 that is connected to a drain 191, such as the drain 191 employed for the overflow 190 of the water supply system 100. The present disclosure is neither restricted to these types of water consumers 210 nor to the illustrated number of water consumers 210.

The water consumer assembly 200 further comprises at least one water pipe 201, 202 connecting the conveying device 120 of the water supply system 100 with the at least one water consumer 211, 212, 213. In other words, the water consumer assembly 200 comprises a water network consisting of the at least one water pipe 201, 202. The water network, i.e. one of the at least one water pipes 201, 202, is fluidly coupled to the bypass pipe 124 downstream of the conveying device 120. For instance, as illustrated in Figures 1 and 2, the water network is fluidly connected to the discharge pipe 116 which stands in fluid communication with the bypass pipe 124.

While the faucet 213 may simply supply cold water (i.e., water having the temperature of the water stored in the buffer tank 110), other water consumers may be equipped with a heater. As a mere example, the coffeemaker 211 can include a heating element (not explicitly illustrated). Likewise, the water heater 212 comprises a heating element or heater 222 to provide for a hot water supply. Such (heatable) water consumers 211, 212 can be galley inserts (GAINs) that can be provided in a galley of an aircraft 1 and in any required number. Thus, depending on the configuration of the aircraft 1, the number of water consumers 210 may significantly vary.

The water consumers 210 of Figure 2 can be conventional water consumers. Thus, there is no necessity to modify the water consumers and legacy aircraft components can still be used with the water supply system 100 and water consumer assembly 200 of the present disclosure.

If the faucet 213 is opened and closed, the kinetic energy of the running water, once stopped, will generate a pressure increase in the water network. Such pressure increase will act on or against the pressure relief valve 125. If the pressure at the pressure relief valve 125 exceeds the threshold pressure level, the pressure relief valve 125 opens and allows excess water to flow into the buffer tank 110.

Likewise, if the water in the heatable water consumers 211, 212 is warmed/heated, the water will expand. Instead of having an overflow at each of these heatable water consumers 211, 212, where the excess water would simply be drained, the excess water increases the pressure in the water network, which again leads to the excess water to be fed into the buffer tank 110 through the pressure relief valve 125. The amount of excess water due to heat expansion can be between 3% and 5% of the amount of heated water. As a mere example, the amount of excess water per heatable water consumer 211, 212 and per heating cycle (heating all the water contained in the water consumer 211, 212) can be between 20 mL and 180 mL, such as approximately 100 mL (depending on the overall capacity of the water consumer 211, 212).

Thus, any excess water that may flow back into the buffer tank 110 may add up depending on when water is discharged from the system, for example, when brewing coffee, tapping hot water at a water heater 212 or tapping cold water at a faucet 213. Thus, the reserve volume 115 of the buffer tank should be set to a multiple of the amount of excess water from one water consumer 210, particularly the amount of excess water from one water consumer 210 multiplied by the maximum number of water consumers 210. As a mere example, the reserve volume 115 may be after 1 L, such as between 0.5 L and 0.8 L. It is to be understood that the reserve volume 115 may be set to correspond to only some of the water consumers 210, such as 50% to 80% of the water consumers 210, in order to avoid a two large reserve volume 115.

In any case, excess water can be saved instead of being drained, which reduces the amount of potable water required entirely. Therefore, a smaller amount of water can be carried in the aircraft 1, which makes the overall system lighter.

In addition, Figure 2 illustrates a vent valve 225 at some of the water consumers 210. The vent valve 225 can be opened, if the water consumer 210 is filled, in order to release the air in the water consumer 210, and is closed once the water consumer 210 is filled. A small amount of air may be left in the water consumer 210 (e.g., to avoid spilling water when filling the water consumer 210). Such air bubble may be used as a pressure reservoir in the water network of the water consumer assembly 200. As a mere example, in a situation where the conveying device 120 does not operate, as no water is demanded from the water consumers 210, and then one of the water consumers 210 is activated, the air bubbles may keep the water pressure in the water network sufficiently high until the conveying device 120 fully operates. Thus, at the activated water consumer 210 a substantially constant pressure can be maintained.

Figure 2 additionally illustrates that the water supply system 100 can comprise a control unit 180 configured to control operation of the conveying device 120. The water consumer assembly 200 comprises at least one signal line 280 configured to transmit an indication signal indicating that one or more of the at least one water consumers 210 are activated. The control unit 180 connected to the at least one signal line 280 is then configured to control operation of the conveying device 120 to maintain a constant pressure level in the at least one water pipe 201, 202. Thus, if a coffeemaker 211 is switched on and/or a faucet 213 or hot water dispenser 212 is used (e.g., a closure valve of the water consumer 212, 213 is opened), this may trigger the transmission of a control signal via the signal line 280 illustrated in dashed lines in Figure 2. The control unit 180 may then be aware of a water demand at the corresponding water consumer 210 and can operate the conveying device 120 accordingly, particularly, to maintain the pressure in the water pipes 201, 202 at a constant level.

Furthermore, Figure 2 also illustrates a drain valve 209 arranged at one of the at least one water pipes 201-204. This allows draining the water network of the water consumer assembly 200, for example, when the aircraft 1 is shutdown or for other purposes, where the water from any water pipe 201-204 has to be removed. When the drain valve 209 is opened, the water from the pipes 201-204 may be released into a drain or waste water system, for example, solely by gravity. Therefore, the drain valve 209 is provided at the lowest point of the water network.

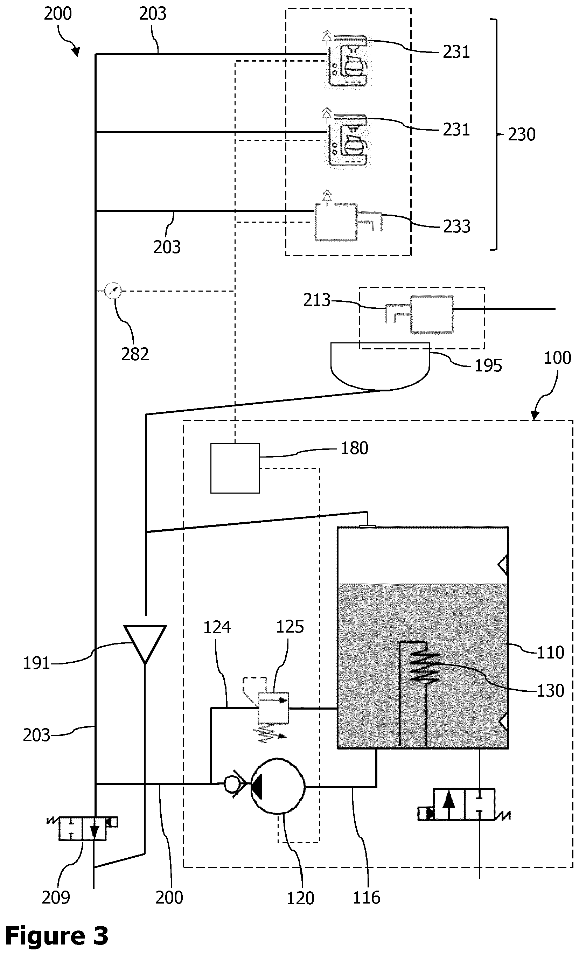

Figure 3 schematically illustrates another exemplary water consumer assembly 200, where similar or the same components are provided with the same reference numerals as in Figures 1 and 2. The description of such components will be omitted, in order to avoid redundancies.

A difference to the system of Figure 2 is that the water supply system 100 of Figure 3 comprises a heater 130 in the buffer tank 110. The heater 130 is configured to heat the water stored in the buffer tank 110 to a predefined temperature. Thus, the heating of water can be performed at a central location, i.e., the buffer tank 110. The water pipes 203 are, hence, hot water pipes. This allows omitting a corresponding heating element in each of the water consumers 230, which renders the water consumers 230 lighter. As mere examples, Figure 3 illustrates two coffeemakers 231 and a hot water faucet 233, which can be provided without an individual heating element (such as heating elements 222 in Figure 2).

Moreover, due to the larger amount of hot water provided by the heater 130 in the buffer tank 110, the number of hot water tapping points can be reduced to one hot water faucet 233. Specifically, in conventional galleys there is a certain number of water providers, such as water heaters 212 of Figure 2, in order to have sufficient hot water at the same time. The heater 130 allows reducing the number of such water heaters 212 and freeing space in a galley for other inserts (GAINs). In addition, as only one hot water faucet 233 is provided, the risk of splashing of hot water is reduced, as it may have been the case in conventional galleys having several water heaters 212. For instance, if two water heaters 212 are used at the same time and one is closed, a splash of hot water may have occurred at the other used water heater 212. This can be avoided by providing the heater 130 in the buffer tank 110.

Figure 3 further illustrates a pressure sensor 282 in the at least one water pipe 203. The pressure sensor 282 can transfer a control signal via the at least one signal line 280 to the control unit 180. This allows the control unit 180 to operate the conveying device 120 based on the measured water pressure in the at least one water pipe 203. Thus, a constant water pressure can be achieved in the water network of the water consumer assembly 200.

It is to be understood that such pressure sensor 282 and control signal may also be employed in any of the other exemplary water consumer assemblies 200 of this disclosure.

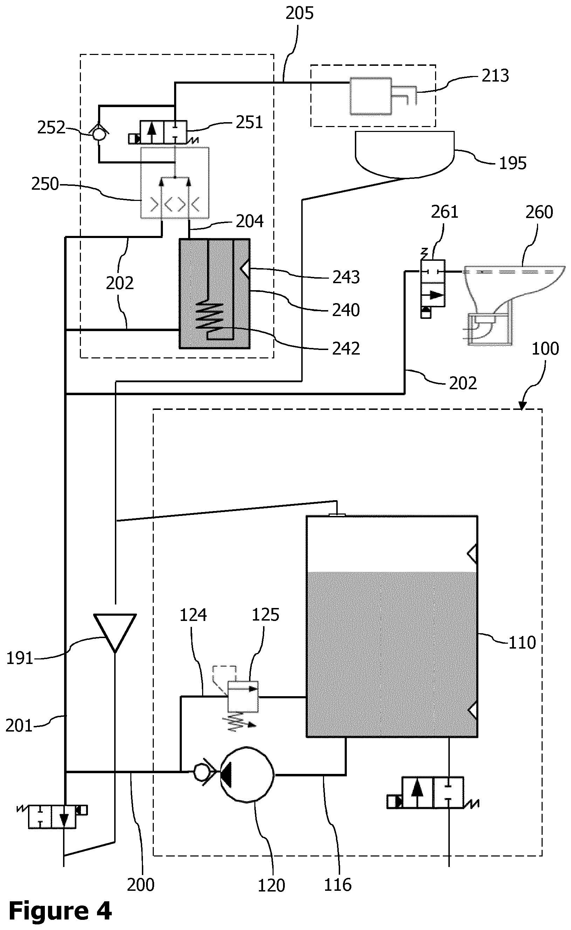

Figure 4 schematically illustrates yet another exemplary water consumer assembly 200, where similar or the same components are provided with the same reference numerals as in Figures 1 to 3. The description of such components will be omitted, in order to avoid redundancies.

In this exemplary water consumer assembly 200, one of the at least one water consumer is a heater tank 240 comprising a heating element 242. Thus, a cold water pipe 202 can supply water from the buffer tank 110 by the conveying device 120 into the heater tank 240. There the water can be heated up to a predefined temperature value. Due to the heat expansion of the water, an increased pressure will develop in the water pipes 201, 202, which can be released via the pressure relief valve 125, and excess water is guided through bypass pipe 124 into buffer tank 110.

The heater tank 240 can comprise an upper level sensor 243, which may be connected to the control unit 180 (not illustrated in Figure 4 for clarity reasons). Thus, the heater tank 240 can be refilled or can be kept full by controlling the conveying device 120 by the control unit 180. On the other hand, the upper level sensor 243 can likewise trigger a control signal to the control unit 180 indicating that the connected faucet 213 has requested water.

Furthermore, a water mixing unit 250 is provided in the water consumer assembly 200 to receive warm water from the heater tank 240 and cold water from a cold water pipe 202, the latter of which is in fluid communication with the buffer tank 110 via conveying unit 120. A faucet valve 251 can be opened, in order to conduct mixed water via mixed water pipe 205 to a regular faucet 213. A ventilation valve 252 may allow air in the mixing unit 250 to vent, until water has reached the ventilation valve 252, e.g., during filling of the mixing unit 250.

The heater tank 240 and mixing unit 250 together can form a water supply unit 259. Such water supply unit 259 can also have a controller (not illustrated) configured to transmit an indication signal via the at least one signal line 280 (Figure 2 and 3) to the control unit 180. The signal can indicate, for example, that the faucet 213 is activated and/or that the heater tank 250 requires filling. It is to be understood that the faucet 213 can also transmit such signal (as in Figures 2 and 3).

Figure 4 additionally illustrates a further water consumer in form of a toilet 260. The toilet 260 comprises a rinse valve 261, which is fluidly coupled via a water pipe 202 to the conveying device 120. By opening the rinse valve 261, the toilet 260 can be flushed. Thus, the pressure in water pipe 202 achieved by the conveying device 120 can be controlled (e.g., by control unit 180 not illustrated in Figure 4, but in Figures 2 and 3) to be sufficient for flushing the toilet 260. This may include that the control unit 180 receives a control signal via a signal line 280 that the rinse valve 261 is activated, so that the control unit 180, for example, increases a throughput of the conveying device 120 to increase a pressure in pipe 202 for the time of flushing the toilet 260. Therefore, adaptation of the water pressure in the water pipes 201, 202 to a type of water consumer can be achieved.

Figure 5 schematically illustrates an aircraft 1 comprising at least one water supply system 100 and/or at least one water consumer assembly 200. The aircraft 1 may include a central water tank 11, which stores a main supply of water. A water pipe 10 can guide water from central tank 11 to the buffer tank 110 of one of the at least one water supply system 100. A water pump is not illustrated for clarity reasons. The water pump can be a high-pressure water pump, and the water pipe 10 is part of a conventional high-pressure water system.

Figure 5 illustrates only one aircraft section 50 having a water supply system 100 and/or water consumer assembly 200. It is to be understood that the aircraft 1 can comprise multiple aircraft sections 50, each of which comprises at least one water supply system 100 and/or at least one water consumer assembly 200. Thus, multiple water pipes 10 can be connected to central water tank 11.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A water supply system (100) for an aircraft section (50), comprising:
a buffer tank (110) configured to receive water from a central tank (11) of a water system (10) of the aircraft (1) and store the received water in an unpressurised manner;
a discharge pipe (116) fluidly coupled to the buffer tank (110);
a conveying device (120) connected to the discharge pipe (116) and configured to convey water from the buffer tank (110) through the discharge pipe (116);
a bypass pipe (124) fluidly coupled to the discharge pipe (116) downstream of the conveying device (120) and the buffer tank (110); and
a pressure relief valve (125) arranged in the bypass pipe (124) and configured to open when a pressure of the water in the bypass pipe exceeds a threshold pressure level and to block water from flowing through the bypass pipe when the pressure of the water in the bypass pipe is below the threshold pressure level,
wherein the water supply system (100) further comprises:
a first water level sensor (113) configured to indicate that a water level in the buffer tank (110) has reached an upper threshold water level, **characterised in that** the upper threshold water level is smaller than a maximum level of the buffer tank (110) where the full capacity of the buffer tank (110) has been reached, such that a reserve storage volume is maintained in the buffer tank (110), and
**in that** the upper threshold water level is set in accordance with a number and/or a type of water consumers (210, 230, 240) supplied with water from the buffer tank (110) via the conveying device (120).

2. The water supply system (100) of claim 1, further comprising:
an overflow (190) configured to drain excess water from the buffer tank (110) exceeding the full capacity of the buffer tank.

3. The water supply system (100) of claim 1 or 2, further comprising:
a heater (130) in the buffer tank (110), the heater (130) being configured to heat the water stored in the buffer tank (110) to a predefined temperature.

4. A water consumer assembly (200), comprising:
a water supply system (100) of one of claims 1 to 3;
at least one water consumer (210, 230, 240, 260); and
at least one water pipe (201-205) connecting the conveying device (120) with the at least one water consumer,
wherein the at least one water pipe (201-205) is fluidly coupled to the bypass pipe (124) downstream of the conveying device (120).

5. The water consumer assembly (200) of claim 4, wherein the at least one water consumer comprises a heatable water consumer (211, 212, 240) including a heating element (222, 242),
wherein, preferably, the reserve storage volume of the buffer tank (110) is to receive and hold an amount of water flowing through the bypass pipe (124) due to heat expansion of the water at the at least one water consumer (211, 212, 240) during operation of the heating element (222, 242).

6. The water consumer assembly (200) of claim 4 or 5, wherein the at least one water consumer is a heater tank (240) comprising a heating element (242), and
wherein the water consumer assembly (200) further comprises:
a water mixing unit (250) configured to receive warm water from the heater tank (240) and cold water from a cold water pipe (202) of the at least one water pipe, to mix the warm and cold water to a predefined temperature, and to provide the water to a faucet (213) being one of the at least one water consumer.

7. The water consumer assembly (200) of one of claims 4 to 6, wherein the water supply system (100) comprises a control unit (180) configured to control operation of the conveying device (120), and wherein the water consumer assembly (200) further comprising:
at least one signal line (280) configured to transmit an indication signal indicating that one or more of the at least one water consumers (210, 230, 240, 259, 260) are activated and/or indicating a water pressure in the at least one water pipe (201-205) measured by a pressure sensor (282),
wherein the at least one signal line (280) is connected to the control unit (180), and
wherein the control unit (180) is configured to control operation of the conveying device (120) to maintain a pressure level in the at least one water pipe constant.

8. An aircraft (1), comprising:
at least one water supply system (100) of one of claims 1 to 3; or
at least one water consumer assembly (200) of one of claims 4 to 7.

## Patentansprüche

1. Wasserversorgungssystem (100) für einen Flugzeugabschnitt (50), umfassend:
einen Puffertank (110), der dazu ausgelegt ist, Wasser von einem zentralen Tank (11) eines Wassersystems (10) des Flugzeugs (1) aufzunehmen und das aufgenommene Wasser drucklos zu speichern;
eine Auslassleitung (116), die mit dem Puffertank (110) fluidisch gekoppelt ist;
eine Fördervorrichtung (120), die mit der Auslassleitung (116) verbunden und dazu ausgelegt ist, Wasser aus dem Puffertank (110) durch die Auslassleitung (116) zu fördern;
eine Bypassleitung (124), die der Fördervorrichtung (120) und dem Puffertank (110) nachgelagert mit der Auslassleitung (116) fluidisch gekoppelt ist; und
ein Druckbegrenzungsventil (125), das in der Bypassleitung (124) angeordnet und dazu ausgelegt ist, sich zu öffnen, wenn der Wasserdruck in der Bypassleitung einen Druckschwellenwert überschreitet, und Wasser daran zu hindern, durch die Bypassleitung zu fließen, wenn der Wasserdruck in der Bypassleitung unter dem Druckschwellenwert liegt,
wobei das Wasserversorgungssystem (100) ferner Folgendes umfasst:
einen ersten Wasserstandssensor (113), der dazu ausgelegt ist, anzugeben, dass der Wasserstand im Puffertank (110) einen oberen Wasserstandsschwellenwert erreicht hat, **dadurch gekennzeichnet, dass** der obere Wasserstandsschwellenwert kleiner ist als ein maximaler Füllstand des Puffertanks (110), bei dem die volle Kapazität des Puffertanks (110) erreicht wurde, so dass ein Reservespeichervolumen im Puffertank (110) aufrechterhalten wird, und
dass der obere Wasserstandsschwellenwert entsprechend einer Anzahl und/oder einer Art von Wasserverbrauchern (210, 230, 240) eingestellt wird, die über die Fördervorrichtung (120) mit Wasser aus dem Puffertank (110) versorgt werden.

2. Wasserversorgungssystem (100) nach Anspruch 1, ferner Folgendes umfassend:
einen Überlauf (190), der dazu ausgelegt ist, überschüssiges Wasser aus dem Puffertank (110) abzulassen, das die volle Kapazität des Puffertanks überschreitet.

3. Wasserversorgungssystem (100) nach Anspruch 1 oder 2, ferner Folgendes umfassend:
eine Heizung (130) im Puffertank (110), wobei die Heizung (130) dazu ausgelegt ist, das im Puffertank (110) gespeicherte Wasser auf eine vordefinierte Temperatur zu erwärmen.

4. Wasserverbraucherbaugruppe (200), umfassend:
ein Wasserversorgungssystem (100) nach einem der Ansprüche 1 bis 3;
mindestens einen Wasserverbraucher (210, 230, 240, 260) und
mindestens eine Wasserleitung (201-205), die die Fördervorrichtung (120) mit dem mindestens einen Wasserverbraucher verbindet,
wobei die mindestens eine Wasserleitung (201-205) der Fördervorrichtung (120) nachgelagert mit der Bypassleitung (124) fluidisch gekoppelt ist.

5. Wasserverbraucherbaugruppe (200) nach Anspruch 4, wobei der mindestens eine Wasserverbraucher einen beheizbaren Wasserverbraucher (211, 212, 240) einschließlich eines Heizelements (222, 242) umfasst,
wobei vorzugsweise das Reservespeichervolumen des Puffertanks (110) eine aufgrund der Wärmeausdehnung des Wassers an dem mindestens einen Wasserverbraucher (211, 212, 240) während des Betriebs des Heizelements (222, 242) durch die Bypassleitung (124) fließende Wassermenge aufnehmen und halten soll.

6. Wasserverbraucherbaugruppe (200) nach Anspruch 4 oder 5, wobei der mindestens eine Wasserverbraucher ein Heiztank (240) ist, der ein Heizelement (242) umfasst, und
wobei die Wasserverbraucherbaugruppe (200) ferner Folgendes umfasst:
eine Wassermischeinheit (250), die dazu ausgelegt ist, warmes Wasser aus dem Heiztank (240) und kaltes Wasser aus einer Kaltwasserleitung (202) der mindestens einen Wasserleitung aufzunehmen, das warme und kalte Wasser auf eine vordefinierte Temperatur zu mischen und das Wasser einem Wasserhahn (213) zuzuführen, der einer des mindestens einen Wasserverbrauchers ist.

7. Wasserverbraucherbaugruppe (200) nach einem der Ansprüche 4 bis 6, wobei das Wasserversorgungssystem (100) eine Steuereinheit (180) umfasst, die dazu ausgelegt ist, den Betrieb der Fördervorrichtung (120) zu steuern, und wobei die Wasserverbraucherbaugruppe (200) ferner Folgendes umfasst:
mindestens eine Signalleitung (280), die dazu ausgelegt ist, ein Anzeigesignal zu übertragen, das angibt, dass einer oder mehrere des mindestens einen Wasserverbrauchers (210, 230, 240, 259, 260) aktiviert sind, und/oder einen Wasserdruck in der mindestens einen Wasserleitung (201-205) angibt, der durch einen Drucksensor (282) gemessen wird,
wobei die mindestens eine Signalleitung (280) mit der Steuereinheit (180) verbunden ist und
wobei die Steuereinheit (180) dazu ausgelegt ist, den Betrieb der Fördervorrichtung (120) zu steuern, das Druckniveau in der mindestens einen Wasserleitung konstant zu halten.

8. Flugzeug (1), umfassend:
mindestens ein Wasserversorgungssystem (100) nach einem der Ansprüche 1 bis 3 oder
mindestens eine Wasserverbraucherbaugruppe (200) nach einem der Ansprüche 4 bis 7.

## Revendications

1. Système d'alimentation en eau (100) pour une section d'aéronef (50), comprenant:
un réservoir tampon (110) configuré pour recevoir de l'eau en provenance d'un réservoir central (11) d'un système d'eau (10) de l'aéronef (1) et stocker l'eau reçue de manière non mise sous pression;
un tuyau d'évacuation (116) couplé fluidiquement au réservoir tampon (110);
un dispositif de transport (120) raccordé au tuyau d'évacuation (116) et configuré pour transporter de l'eau depuis le réservoir tampon (110) à travers le tuyau d'évacuation (116);
un tuyau de dérivation (124) couplé fluidiquement au tuyau d'évacuation (116) en aval du dispositif de transport (120) et du réservoir tampon (110); et
une soupape de détente de pression (125) agencée dans le tuyau de dérivation (124) et configurée pour s'ouvrir lorsqu'une pression de l'eau dans le tuyau de dérivation dépasse un niveau de pression seuil et pour empêcher de l'eau de s'écouler à travers le tuyau de dérivation lorsque la pression de l'eau dans le tuyau de dérivation est en dessous du niveau de pression seuil,
dans lequel le système d'alimentation en eau (100) comprend en outre:
un premier capteur de niveau d'eau (113) configuré pour indiquer qu'un niveau d'eau dans le réservoir tampon (110) a atteint un niveau d'eau seuil supérieur, **caractérisé en ce que** le niveau d'eau seuil supérieur est plus petit qu'un niveau maximum du réservoir tampon (110) où la capacité entière du réservoir tampon (110) a été atteinte, de manière telle qu'un volume de stockage de réserve est maintenu dans le réservoir tampon (110), et
**en ce que** le niveau d'eau seuil supérieur est réglé conformément à un nombre et/ou un type de consommateurs d'eau (210, 230, 240) alimentés en eau en provenance du réservoir tampon (110) par l'intermédiaire du dispositif de transport (120).

2. Système d'alimentation en eau (100) de la revendication1, comprenant en outre:
un trop-plein (190) configuré pour vider un excès d'eau depuis le réservoir tampon (110) dépassant la capacité entière du réservoir tampon.

3. Système d'alimentation en eau (100) de la revendication1 ou2, comprenant en outre:
un organe chauffant (130) dans le réservoir tampon (110), l'organe chauffant (130) étant configuré pour chauffer l'eau stockée dans le réservoir tampon (110) jusqu'à une température prédéfinie.

4. Ensemble de consommateur d'eau (200), comprenant:
un système d'alimentation en eau (100) d'une des revendications1 à3;
au moins un consommateur d'eau (210, 230, 240, 260); et
au moins un tuyau d'eau (201-205) raccordant le dispositif de transport (120) à l'au moins un consommateur d'eau,
dans lequel l'au moins un tuyau d'eau (201-205) est couplé fluidiquement au tuyau de dérivation (124) en aval du dispositif de transport (120).

5. Ensemble de consommateur d'eau (200) de la revendication4, dans lequel l'au moins un consommateur d'eau comprend un consommateur d'eau chauffable (211, 212, 240) incluant un élément chauffant (222, 242),
dans lequel, de préférence, le volume de stockage de réserve du réservoir tampon (110) est destiné à recevoir et contenir une quantité d'eau s'écoulant à travers le tuyau de dérivation (124) en raison de dilatation calorifique de l'eau à l'au moins un consommateur d'eau (211, 212, 240) durant le fonctionnement de l'élément chauffant (222, 242).

6. Ensemble de consommateur d'eau (200) de la revendication4 ou5, dans lequel l'au moins un consommateur d'eau est un réservoir de chauffage (240) comprenant un élément chauffant (242), et
dans lequel l'ensemble de consommateur d'eau (200) comprend en outre:
une unité de mélangeage d'eau (250) configurée pour recevoir de l'eau chaude en provenance du réservoir de chauffage (240) et de l'eau froide en provenance d'un tuyau d'eau froide (202) de l'au moins un tuyau d'eau, pour mélanger l'eau chaude et froide jusqu'à une température prédéfinie, et pour fournir l'eau à un robinet (213) étant un de l'au moins un consommateur d'eau.

7. Ensemble de consommateur d'eau (200) d'une des revendications4 à6, dans lequel le système d'alimentation en eau (100) comprend une unité de commande (180) configurée pour commander l'opération du dispositif de transport (120), et dans lequel l'ensemble de consommateur d'eau (200) comprenant en outre:
au moins un circuit de transmission (280) configuré pour transmettre un signal d'indication indiquant qu'un ou plusieurs de l'au moins un consommateur d'eau (210, 230, 240, 259, 260) sont activés et/ou indiquant une pression d'eau dans l'au moins un tuyau d'eau (201-205) mesurée par un capteur de pression (282),
dans lequel l'au moins un circuit de transmission (280) est raccordé à l'unité de commande (180), et
dans lequel l'unité de commande (180) est configurée pour commander le fonctionnement du dispositif de transport (120) pour maintenir un niveau de pression dans l'au moins un tuyau d'eau constant.

8. Aéronef (1), comprenant:
au moins un système d'alimentation en eau (100) d'une des revendications1 à3; ou
au moins un ensemble de consommateur d'eau (200) d'une des revendications4 à7.
